**Europäisches Patentamt**

**European Patent Office**

**Office européen des brevets**

(11) Veröffentlichungsnummer : **0 373 518 B1**

(12) # EUROPÄISCHE PATENTSCHRIFT

(45) Veröffentlichungstag der Patentschrift :
04.11.92 Patentblatt 92/45

(51) Int. Cl.$^5$ : **A22C 13/00, A22C 17/14**

(21) Anmeldenummer : **89122620.1**

(22) Anmeldetag : **07.12.89**

(54) **Verfahren zum Kalibrieren bzw. Standardisieren von Naturdärmen.**

(30) Priorität : **12.12.88 DE 3841808**

(43) Veröffentlichungstag der Anmeldung :
**20.06.90 Patentblatt 90/25**

(45) Bekanntmachung des Hinweises auf die
Patenterteilung :
**04.11.92 Patentblatt 92/45**

(84) Benannte Vertragsstaaten :
**AT BE CH DE ES FR GB GR IT LI LU NL SE**

(56) Entgegenhaltungen :
**DE-A- 2 926 590**
**DE-B- 1 017 453**
**GB-A- 616 340**

(73) Patentinhaber : **Rindfleisch, Peter, Dr.**
**Colonnaden 72**
**W-2000 Hamburg 36 (DE)**

(72) Erfinder : **Klöpping, Peter A.**
**An der Alster 3**
**W-2000 Hamburg 1 (DE)**

(74) Vertreter : **Glaeser, Joachim, Dipl.-Ing.**
**Patentanwalt Königstrasse 28**
**W-2000 Hamburg 50 (DE)**

**Beschreibung**

Die Erfindung bezieht sich auf ein Verfahren zum Kalibrieren und Standardisieren von Naturdärmen zur Verwendung als Hüllen für Nahrungsmittel und dergl., insbesondere für Wurst.

Naturdärme haben von Hause aus eine unregelmäßige Gestalt, d.h. sie weicht über die Länge des Naturdarms betrachtet stark von der Idealform eines geometrischen Zylinders ab. Dies ist eine seit langem bekannte Tatsache, der man bislang in zwei Richtungen Rechnung getragen hat. Zum einen hat man diese unregelmäßige Gestalt in Kauf genommen, so daß das Fertigprodukt, beispielsweise eine Wurst, ebenfalls eine recht unregelmäßige Gestalt aufwies. Zum anderen hat man sich unter der Bezeichnung Kalibrierung von Naturdärmen damit befaßt, aus unregelmäßig gestalteten Naturdärmen regelmäßige Zylinder zu erzeugen, so daß das Endprodukt, eine Wurst, ebenfalls eine im wesentlichen zylindrische Form erhielt.

In diesem Zusammenhang hat man den Naturdarm nicht direkt als schlauchförmige Hülle verwendet, sondern man hat ihn aufgeschnitten, in rechteckige Streifen unterteilt, und diese Streifen zu zylindrischen Hüllen zusammengenäht. Hierbei trat dann das Problem auf, daß die Nahtstellen selbst nicht hinlänglich dicht waren, so daß bei der Herstellung von Kochwürsten die Wurstmasse durch die Nähte nach außen dringen konnte.

Mit diesem Folgeproblem beim Versuch einer optimalen Kalibrierung von Naturdärmen, befaßt sich die DE-OS 28 48 987 und schlägt vor, daß die Nahtstellen von zusammengenähten Naturdarmstücken mittels einer verzehrbaren Dichtungsmasse abgedichtet werden sollen.

Bei einem anderen bekannten Verfahren (DE-A-32 16 340) werden dadurch gleichmäßige Wursthüllen erzeugt, daß in die Naturdarmhüllen ein kalibrierter Kunstdarm aus genießbarem Gewebe eingezogen wird. Das gleichmäßige Kaliber des Naturdarms bleibt dann in dem fertigen Produkt erhalten, indem nämlich der Kunstdarm bei der Füllung mit der Wurstmasse bis zu seinem vorbestimmten Durchmesser gereckt wird.

Es ist im Zusammenhang mit der Lagerung von Nahrungsmittelhüllen aus nativer Zellulose bekannt (DE-A 29 26 590), die Nahrungsmittelhülle vor der Lagerung mittels Hochfrequenzenergie zu erhitzen. Dadurch wird die erforderliche Keimfreiheit erzielt. Es ist auch aus anderem Zusammenhang (Trocknung) heraus bekannt, Naturdarmstücke zu erhitzen, jedoch konnte hieraus keine Kalibrierung bei Naturdarmstücken erreicht werden.

Ein Verfahren gemäß dem Oberbegriff des Anspruchs 1 ist aus der DE-B-1017 453 bekannt

Der Erfindung liegt die Aufgabe zugrunde, Naturdarmstücke zu kalibrieren und zu standardisieren.

Gelöst wird diese Aufgabe durch die im Patentanspruch angegebenen Merkmale.

Mit Hilfe der Erwärmung der Wandung der Naturdarmhülle zufolge der Molekülbewegung durch das Mikrowellenfeld, wird eine Veränderung der Struktur und eine Anpassung an die Gestalt des Trägers bewirkt, die bleibend ist. Bevorzugte Frequenzen liegen im Bereich zwischen 300 bis 1 GHz. Dadurch nimmt das Naturdarmstück die Gestalt bzw. das Kaliber des Trägers an, und zwar über seine gesamte Länge.

Es ist daher auch möglich, Einzeldarmstücke miteinander zu einem Endlosstrang zu verbinden und gemäß der Erfindung zu behandeln, so daß ein Endlosstrang mit konstantem Kaliber über die Gesamterstreckung entsteht.

Das Verfahren gemäß der Erfindung kann auch auf die Herstellung von Kondomen angewendet werden.

Bei einem speziellen Verfahren gemäß der vorliegenden Erfindung wird für Naturdarmstücke in der üblichen Länge eine Leistung von 500W eines Mikrowellenerzeugers eingesetzt. Die Naturdarmstücke sind zuvor frei von Salz gemacht worden und werden bis ca. 10 Minuten auf einem Träger der Mikrowellenenergie ausgesetzt. Es kann sich hierbei um einen statischen Vorgang, jedoch auch um einen kontinuierlichen Vorgang handeln, bei welchem der Träger mit dem Naturdarmstück durch eine entsprechend gestaltete Quelle der Mikrowellenenergie mit konstanter Geschwindigkeit hindurchgeführt wird.

Als Träger kommen weitgehend unpolare Materialien, beispielsweise Glas aber auch Polyolefin-Werkstoffe, in Frage. Um nach dem Warmformgebungsvorgang das geschrumpfte Naturdarmstück vom Träger leichter abheben zu können, können Antihaftmittel eingesetzt werden, beispielsweise Pflanzenöle, Glycerin, Fettsäuren oder Silikonöl oder aber Unterzüge zwischen Träger und Naturdarmstück. Als Materialien für den Unterzug kommen Polyolefinweitestoffe in Frage.

Als Abmessung für den Träger kommen Durchmesser in Frage, die etwa 4mm bis 12mm unterhalb dem des gewünschten Kalibers liegen.

Es ist auch möglich, einen Träger einzusetzen, der eine vom Zylinder abweichende Form aufweist. In diesem Falle wird dann das Naturdarmstück auf die entsprechende Form gebracht.

Das Verfahren gemäß der Erfindung kann auch im direkten Zusammenhang mit der Wurstfüllung durchgeführt werden, indem die Tülle des Wurstfüllers als Träger eingesetzt wird und auf der Tülle befindliche Naturdarmstücke mit Hilfe der Mikrowellenenergie auf die Tülle geschrumpft und über die aus der Tülle austretende Wurstmasse gebracht werden.

## Patentansprüche

1. Verfahren zum Kalibrieren bzw. Standardisieren von Naturdärmen zur Verwendung als Hüllen für Nahrungsmittel und dergl., insbesondere für Wurst, durch Warmformgebung eines aufd einen Träger aufgebrachten Naturdarms, dadurch gekennzeichnet, daß der zuvor entsalzte Naturdarm über eine Zeitdauer von bis zu einigen Minuten gezielt einem elektro-magnetischen Wechselfeld mit Wellenlängen unter 10cm, vorzugsweise einem Mikrowellenfeld, auf dem Träger mit dem gewünschten Kaliber und aus unpolarem Material oder wesentlich unpolarerem Material im Vergleich zu dem des Naturdarms ausgesetzt wird.

## Claims

1. A process for calibration or standardization of natural intestines for use as skins for foods and the like, for sausage in particular, by means of hot forming of an intestine put on a carrier, characterized by the fact that a previously desalted natural intestine is subjected deliberately over a period of several minutes to an alternating electromagnetic field of less than 10 cm., preferably a microwave field, on the carrier of the desired caliber and of nonpolar material or essentially nonpolar material in comparising to that of the natural intestine.

## Revendications

1. Procédé pour calibrer et pour standardiser des boyaux naturels, pour l'utilisation comme enveloppes de produits naturels et similaires, en particulier de la saucisse, par formage à chaud d'un boyau naturel appliqué sur un support, caractérisé en ce que le boyau naturel, préalablement dessalé, est appliqué, pour une durée allant jusqu'à quelques minutes, sur le support présentant le calibre souhaité et constitué d'un matériau non polaire, ou d'un matériau essentiellement non polaire par comparaison avec celui du boyau naturel, et soumis à un champ électromagnétique alternatif comportant des longueurs d'onde inférieures à 10cm, de préférence un champ de microondes.